(19) Europäisches Patentamt

European Patent Office

Office européen des brevets

(11) **EP 3 199 927 B1**

(12) **EUROPEAN PATENT SPECIFICATION**

(45) Date of publication and mention
of the grant of the patent:
**01.11.2023 Bulletin 2023/44**

(21) Application number: **16157348.0**

(22) Date of filing: **25.02.2016**

(51) International Patent Classification (IPC):
**G01F 1/36** *(2006.01)*        **G01F 25/10** *(2022.01)*
**G01F 1/50** *(2006.01)*        **G01F 15/06** *(2022.01)*

(52) Cooperative Patent Classification (CPC):
**G01F 1/363; G01F 25/10;** G01F 1/50; G01F 15/06

(54) **A METHOD AND A SYSTEM FOR METERING FLOW THROUGH A FLUID CONDUIT**

VERFAHREN UND SYSTEM ZUM MESSEN DES DURCHFLUSSES DURCH EINE
FLÜSSIGKEITSLEITUNG

PROCÉDÉ ET SYSTÈME PERMETTANT DE MESURER L'ÉCOULEMENT À TRAVERS UN
CONDUIT DE FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2016 EP 16153571**

(43) Date of publication of application:
**02.08.2017 Bulletin 2017/31**

(73) Proprietor: **ABB Schweiz AG
5400 Baden (CH)**

(72) Inventor: **van Dal, J. C. H. M.
5094 Bd Lage Mierde (NL)**

(74) Representative: **Maiwald GmbH
Elisenhof
Elisenstraße 3
80335 München (DE)**

(56) References cited:
**WO-A1-97/42467**          **WO-A1-2012/009062**
**WO-A1-2012/118690**       **JP-A- H08 136 386**
**US-A1- 2002 189 369**     **US-A1- 2005 097 963**
**US-A1- 2007 225 924**     **US-A1- 2008 006 094**
**US-A1- 2009 326 839**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

**EP 3 199 927 B1**

**Description**

The invention is about a method of metering flow through a fluid conduit, which comprises a fluid obstruction, the method comprising the steps of measuring a differential pressure taken between a first conduit position upstream of the fluid obstruction and a second conduit position downstream of the fluid obstruction, and calculating a fluid flow rate using the differential pressure measurement, according to the preamble of claim 1.

The invention is also about a flow metering system, comprising a fluid conduit, said fluid conduit comprising a fluid obstruction, said flow metering system further comprising a first pressure tapping at a location upstream of the fluid obstruction and a second pressure tapping at a location downstream of the fluid obstruction and a differential pressure transmitter arranged for measuring the differential pressure between the first and second pressure tapping, according to the preamble of claim 8.

The present invention relates to industrial process control or monitoring systems. More specifically, the present invention relates to systems which measure flow of process fluid in an industrial process.

Many industrial processes use or operate upon various types of fluids. During operation of the process, the fluids may be transferred through process piping from one location to another. In many instances, it is desirable to monitor the flow of such fluid through the process piping. The monitoring can be used for measurement purposes alone, or can be used in a control system. For example, a valve can be controlled based upon the amount of flow of process fluid which is measured.

Process variable transmitters are used to measure process variables of industrial processes. One such process variable is flow of process fluid. Various techniques can be used to measure such flow. One such technique measures flow based upon a differential pressure developed across a flow restriction element or flow obstruction, placed in the process piping. The differential pressure can be measured by a differential pressure transmitter and used to calculate the flow of process fluid. The flow restriction element placed in the flow causes various pressures to be developed, as described in WO2008/025935.

Differential pressure flow measurement is based on a flow restriction element that creates a pressure drop in the process fluid. Traditionally the differential pressure measurement is based on two pressure tappings, one upstream of the flow restriction element and one downstream at a position close to the point with the lowest pressure. A differential pressure transmitter is used to measure the pressure drop over the flow restriction element. From the pressure drop the flow rate can be calculated by using the Bernoulli equation. The equation also requires the density of the fluid that is typically calculated by a flow computer based on a pressure and temperature measurement.

Various diagnostic techniques have been implemented in process variable transmitters. Many techniques related to differential process flow measurement are based upon monitoring statistical variations in detected pressure in order to identify problems associated with the impulse lines which couple the transmitter to the process fluid. For example, if an impulse lines become plugged, a change in the standard deviation of the signal may be detected.

WO2008/025935 discloses a diagnostic technique which is based on a third pressure tapping. As discussed in WO2008/025935, a primary element creates a number of differential pressures in a flowing process fluid. By using a third tapping further downstream at a point where the pressure has recovered from the flow disturbance, two additional differential pressure measurements can be configured. For each of the three differential pressure transmitters a mass flow rate can be calculated. As there are three flow rate equations predicting the same flow through the same flow restriction element there is the potential for comparison and hence diagnostics. Furthermore for any flow restriction element operating with single phase homogenous flow, the ratio of the Permanent Pressure Loss PPL to the traditional DP is a constant value, resulting in a further parameter for diagnostics.

Document WO 2012 118 690 A1 relates to systems which measure flow of process fluid in an industrial process, including a flow restriction element in the process pipe. A first differential pressure transmitter is configured to measure a first differential pressure (DP) across the flow restriction element in response to flow of process fluid. A second differential pressure transmitter is configured to measure a second differential pressure in the process fluid across the flow restriction element, corresponding to the permanent pressure loss (PPL), which is a differential pressure measured from a location upstream of the restriction element and a location downstream where the pressure has fully recovered. Circuitry performs diagnostics based upon the first differential pressure and the second differential pressure.

Document WO 1997 042 467 A1 relates to a Bernoulli flow element for measuring fluid velocity in a conduit.

Document US 2002 189 369 A1 relates to a Venturi flowmeter for use in an exhaust sampling apparatus.

Document US 2009 326 839 A1 relates to a process fluid flow measurement device.

Document WO 2012 009 062 A1 relates to measuring line pressure in a differential pressure transmitter.

Document US 2005 097 963 A1 pertains to diagnosis of pressure sensing devices.

Document US 2008 006 094 A1 relates to a pressure transmitter.

Document JP H08 136 386 A relates to detecting clogging of a pressure introduction pipe.

Document US 2007 225 924 A1 relates to an apparatus and method for detecting blockage of impulse lines.

The prior art diagnostics techniques based on comparing flow rates measured by various differential pressure

2

transmitters require a variety of mass flow calculations with associated calibration requirements, turning flow metering diagnostics complex. In the light of the prior art it is the objective of the present invention to create a method of metering flow through a fluid conduit and a related flow metering system which provides for a less complex and improved diagnostic technique.

The objective concerning the method is achieved by a method of metering flow through a fluid conduit with the features of claim 1. The objective concerning the system is achieved by a flow metering system with the features of claim 8.

According to the invention, the method further comprises the steps of measuring a first static pressure upstream or downstream of the fluid obstruction, measuring a recovered static pressure at a recovered pressure location downstream of the fluid obstruction, performing diagnostics based on parameters derived from the differential pressure, the first static pressure and the measured recovered static pressure.

Advantage of the method according to the invention is that diagnostics according to the invention relies just on one differential pressure and two static pressure measurements, which turns diagnostics less complex than known in the prior art. Additionally, the method according to the invention provides the possibility to perform easy diagnostics for the static pressure measurement in addition to diagnostics for the fluid obstruction element and the differential pressure measurement. According to a preferred embodiment, the method further comprises the step of performing diagnostics based upon observing a trend in changes of diagnostic parameters derived from the differential pressure, the first static pressure and the measured recovered static pressure.

According to the invention, the method further comprises the step of deriving a calculated recovered pressure downstream of the fluid obstruction from the differential pressure and the first static pressure, and deriving a diagnostic parameter from the calculated recovered pressure and the measured recovered static pressure.

According to a preferred embodiment, the method further comprises the steps of deriving the diagnostic parameter from the deviation between the calculated recovered pressure and the measured recovered static pressure, and observing a trend of the deviation between the calculated recovered pressure and the measured recovered static pressure, and indicating a diagnostic issue once said deviation exceeds an expected value.

According to a preferred embodiment, the method further comprises the steps of measuring a second static pressure downstream of the fluid obstruction in case the first static pressure is measured upstream of the fluid obstruction or measuring a second static pressure upstream of the fluid obstruction in case the first static pressure is measured downstream of the fluid obstruction, and performing diagnostics based on parameters derived from the differential pressure, the first static pressure, the measured recovered static pressure and the measured second static pressure.

According to a preferred embodiment, the method further comprises the step of performing diagnostics based upon observing a trend in changes of parameters derived from the differential pressure, the first static pressure, the measured recovered static pressure and the measured second static pressure.

According to a preferred embodiment, the method further comprises the steps of deriving a calculated second static pressure downstream of the fluid obstruction in case the first static pressure is measured upstream of the fluid obstruction or deriving a calculated second static pressure upstream of the fluid obstruction in case the first static pressure is measured downstream of the fluid obstruction from the differential pressure and the first static pressure, and deriving a further diagnostic parameter from the measured second static pressure and the calculated second static pressure. According to a preferred embodiment, the method further comprises the steps of deriving said further diagnostic parameter from the deviation between the measured second static pressure and the calculated second static pressure, and observing a trend of the deviation between the measured second static pressure and the calculated second static pressure, and indicating a diagnostic issue once the deviation exceeds an expected value.

According to the invention, the flow metering system further comprises a recovered pressure tapping at a recovered pressure location downstream of the second pressure tapping, a first absolute pressure transmitter arranged for measuring a first static pressure at the first pressure tapping or a first absolute pressure transmitter arranged for measuring a first static pressure at the second pressure tapping, a recovered absolute pressure transmitter arranged for measuring the recovered static pressure at the recovered pressure tapping, a circuitry configured to perform diagnostics based on parameters derived from the differential pressure, the first static pressure and the measured recovered static pressure.

According to a preferred embodiment, the system further comprises a second absolute pressure transmitter arranged for measuring the static pressure at the second pressure tapping in case the first absolute pressure transmitter is arranged at the first pressure tapping or further comprising a second absolute pressure transmitter arranged for measuring the static pressure at the first pressure tapping in case the first absolute pressure transmitter is arranged at the second pressure tapping, the circuitry being further configured to perform diagnostics based on parameters derived from the differential pressure, the first static pressure, the measured recovered static pressure and the measured second static pressure.

According to a preferred embodiment, the pressure transmitters are configured for communicating with each other.

According to a preferred embodiment, the circuitry is located within one of the pressure transmitters.

According to a preferred embodiment, at least one of the pressure transmitters is configured for communication with a central location.

According to a preferred embodiment, the circuitry is located within the central location.

The method and system according to the current invention is also based on three pressure tappings, but uses a single differential pressure transmitter and multiple absolute pressure transmitters instead. The differential pressure transmitter is installed at the traditional upstream and downstream tappings. The first pressure transmitter is installed at the upstream pressure tapping, while a recovered pressure transmitter is installed at the tapping at the recovered pressure location. Optionally a second pressure transmitter is installed at the downstream pressure tapping.

In the scope of the invention, it is also possible to install the first pressure transmitter at the downstream pressure tapping and the optional second pressure transmitter at the upstream pressure tapping.

The diagnostics method according to the current invention is based on the fact that the static pressure at the recovered pressure location is both measured and calculated.

In case the first pressure transmitter is installed at the upstream pressure tapping, the calculated recovered pressure P3c is based on the measured upstream static pressure P1m and the permanent pressure loss PPL:

$$(1) \qquad P3c = P1m - PPL$$

In case the first pressure transmitter is installed at the downstream pressure tapping, the calculated recovered pressure P3c is based on the measured downstream static pressure P1 m', the differential pressure and the permanent pressure loss PPL:

$$(1') \qquad P3c = P1m' + DP - PPL$$

Several different equations for the calculation of the PPL are available from literature. Most equations express the PPL as a ratio of the differential pressure DP. A simple equation known from literature for orifice plates, which is only a function of the Beta ratio, is reproduced in equation (2) below. The Beta ratio is defined as the diameter of the flow restriction element relative to the internal pipe diameter.

$$(2) \qquad PPL = DP * [1.033 - 0.8552*(\text{Beta ratio } ^{\wedge}1.5)]$$

A deviation between the calculated recovered pressure P3c and the measured recovered pressure P3m larger than expected indicates an issue with one of the components.

Optionally a second pressure transmitter is configured at either the downstream pressure tapping, in case the first pressure transmitter is located at the upstream pressure tapping, or at the upstream pressure tapping, in case the first pressure transmitter is located at the downstream pressure tapping. This enables an additional check by comparing the measured downstream pressure P2m with a calculated downstream pressure P2c in case the first pressure transmitter is located at the upstream pressure tapping, see equation (3), or by comparing the measured upstream pressure P2m' with a calculated upstream pressure P2c' in case the first pressure transmitter is located at the downstream pressure tapping, see equation (3') :

$$(3) \qquad P2c = P1m - DP$$

$$(3') \qquad P2c' = P1m' + DP$$

Monitoring the deviation between the calculated downstream pressure P2c and the measured downstream pressure P2m values, or between the calculated upstream pressure P2c' and the measured upstream pressure P2m' values, provides an additional parameter, making the diagnostics more sensitive for potential issues and allowing for a more accurate identification of the failing component.

The invention will be described in greater detail by description of two embodiments with reference to the accompanying drawings, wherein

Figure 1    shows a simplified schematic of the process piping with the flow restriction element and the location of the transmitters according to a first embodiment of the invention,

Figure 2    shows plots of the profile of the static pressure against position in the process piping shown in figure 1,

Figure 3    shows a more detailed schematic of the flow metering system according to the first embodiment of the invention,

Figure 4    shows a more detailed schematic of the flow metering system according to a second embodiment of the invention,

Figure 5    shows a more detailed schematic of the flow metering system according to a third embodiment of the invention,

Figure 6    shows a more detailed schematic of the flow metering system according to a fourth embodiment of the invention,

Figure 7    shows a more detailed schematic of the flow metering system according to a fifth embodiment of the invention,

Figure 8    shows a simplified schematic of the process piping with the flow restriction element and the location of the transmitters according to a sixth embodiment of the invention.

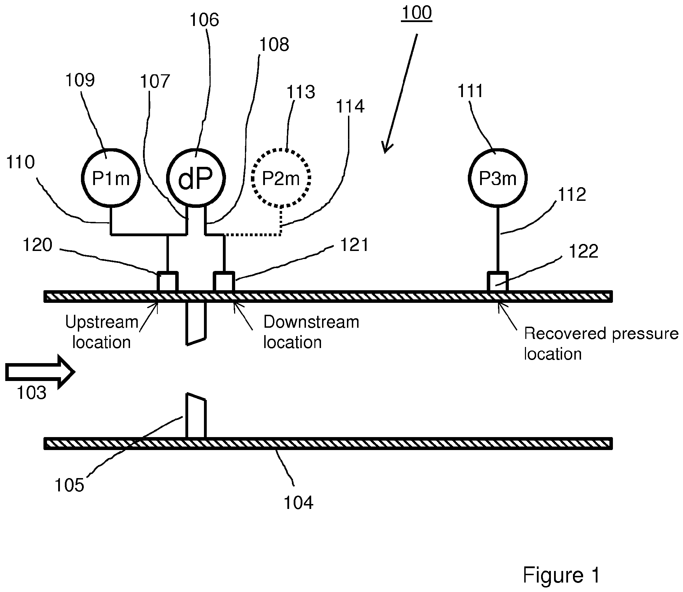

Looking first at figure 1, this shows a simplified schematic of the process piping 104 with the flow restriction element 105 and the location of the pressure transmitters 109, 106, 113, 111 according to a first embodiment of the invention. Here the first pressure transmitter 109 is located at the upstream pressure tapping 120, and an optional second pressure transmitter 113 is located at the downstream pressure tapping 121.

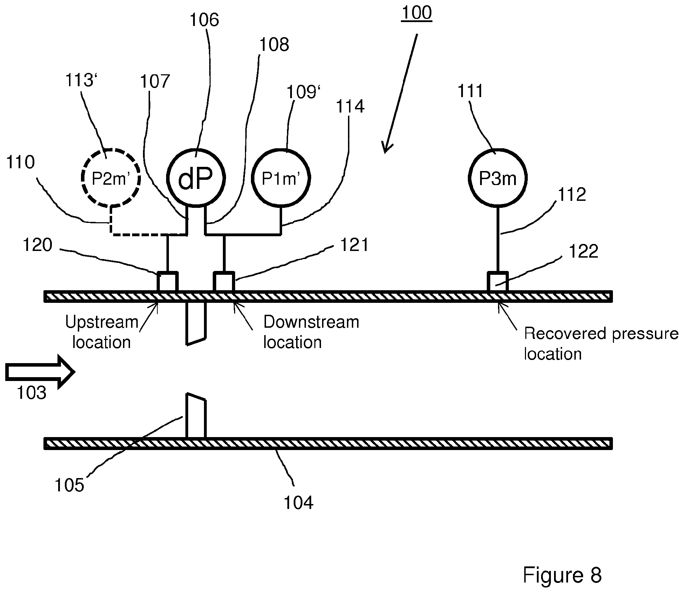

Figure 8, in comparison, shows an alternative schematic of the process piping 104 with the flow restriction element 105 and the location of the pressure transmitters 113', 106, 109', 111, where the first pressure transmitter 109' is located at the downstream pressure tapping 121, and an optional second pressure transmitter 113' is located at the upstream pressure tapping 120.

Turning back to figure 1, this shows a system 100 for measuring flow of a process fluid 103 through process piping 104 by means of an orifice plate as the flow obstruction or flow restriction device 105. A differential pressure transmitter 106 is connected to the process piping 104 through impulse piping 107 at a first pressure tapping 120 upstream of the flow restriction element 105, and impulse piping 108 at a second pressure tapping 121 downstream of the flow restriction element 105, and is configured to measure the differential pressure DP between the first and second pressure tapping positions.

A first absolute pressure transmitter 109 is connected through impulse piping 110 at the first pressure tapping 120 and is configured to measure the static pressure P1 at the first pressure tapping 120.

A recovered absolute pressure transmitter 111 is connected through impulse piping 112 at the recovered pressure tapping 122 and is configured to measure the recovered static pressure P3 at the recovered pressure tapping 122.

An optional second absolute pressure transmitter 113 is connected through impulse piping 114 at the second pressure tapping 121 and is configured to measure the downstream static pressure P2 at the second pressure tapping 121. Because it is optional, in figure 1 the second absolute pressure transmitter 113 is marked in a dotted line.

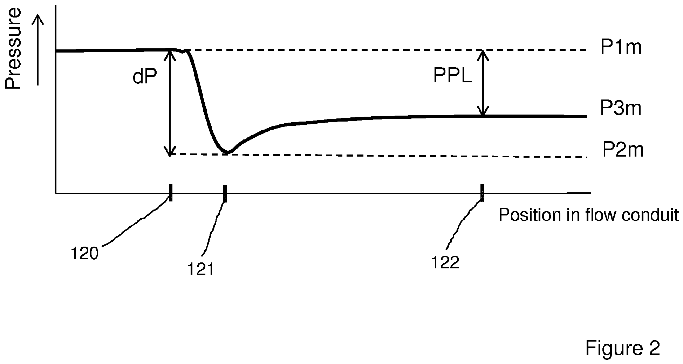

Figure 2 shows the profile of the static pressure against position in the process piping 104 shown in figure 1. The pressure tapping positions 120, 121, 122 are marked on the abscissa, the pressure in relative values is marked on the ordinate. Upstream of the orifice plate 105 the static pressure has the relatively high value P1m, as measured at the first pressure tapping 120 with the first absolute pressure transmitter 109. Pressure drops significantly across the orifice plate 105. The static pressure P2m at the second pressure tapping 121 closely downstream of the orifice plate 105 is significantly lower than the static pressure P1m upstream the orifice plate. In the further course of downstream flow, the static pressure recovers again to a value higher that P2m, but permanently lower than P1m. This is the so called recovered pressure, measured as P3m further downstream of the second pressure tapping 121 at a recovered pressure tapping 122 with the recovered pressure transmitter 111.

The difference between the recovered pressure P3m and the undisturbed static pressure upstream of the orifice plate 105 is called the Permanent Pressure Loss PPL. The difference between the static pressure P1m and P2m upstream and downstream close to the orifice plate 105 is the differential pressure dP and is measured with the differential pressure transmitter 106.

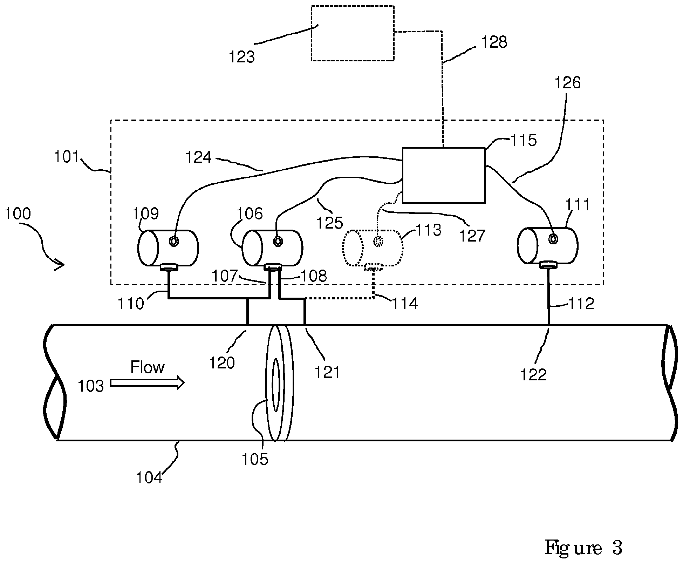

Turning now to figure 3, this shows a more detailed schematic of the flow metering system from figure 1. The differential pressure transmitter 106, the first absolute pressure transmitter 109, the recovered absolute pressure transmitter 111 and the optional second absolute pressure transmitter 113 are shown to be integrated within a transmitter sub-system 101. It is indicated here schematically and exemplarily only by a box with dotted line, but can be realized in a variety of embodiments, including a common transmitter unit just a virtual transmitter unit.

The pressure transmitters 109, 106, 111 and optionally 113 are connected to circuitry 115 that performs the diagnostics. Connection is shown here exemplarily and schematically only by signal lines 124, 125, 126, 127. These signal lines 124, 125, 126, 127 could be traditional two-wire analog signal lines or a wired or wireless digital communications signal line such as HART or wireless HART, Modbus and Foundation Fieldbus.

A typical example, although not shown in a figure, is a system where all the pressure transmitters 109, 106, 113, 111 are connected to a flow computer and the diagnostics circuitry 115 is in the flow computer.

Circuitry 115 is optionally shown to be connected to a central location 123 by another signal line 128, due to the optional character indicate in a dotted line. The central location 123 can for instance be a control system or a flow computer. The communication of the circuitry 115 with the central location is shown as signal line 128 and can be a traditional two-wire analog signal or a wired or wireless digital communications signal such as HART or wireless HART, Modbus and Foundation Fieldbus.

The circuitry 115 executes the diagnostic procedure as explained above. It determines the PPL according to equation (2) using the differential pressure measurement dP. It determines the calculated recovered pressure P3c according to equation (1), and optionally the calculated downstream pressure P2c according to equation (3). It observes a trend in changes of those parameters. Particularly, it observes a trend in the deviation between the calculated recovered pressure P3c and the measured recovered pressure P3m. With the present invention, the differential pressure and the two, or optionally three, static pressures are monitored over time. The measured static pressure value P3m is compared with the calculated value P3c. Variations over time, so called trends, of the measured and calculated static pressure values are monitored and used to identify a failing component. During normal operation, the deviation between the measured and calculated static pressure P3m - P3c value remains approximately zero. However, if there is problem with the system, the deviation will tend to increase or decrease. The circuitry will indicate a diagnostic problem once the deviation exceeds an expected value, for example zero, in either direction, either surmounting or falling below the expected value.

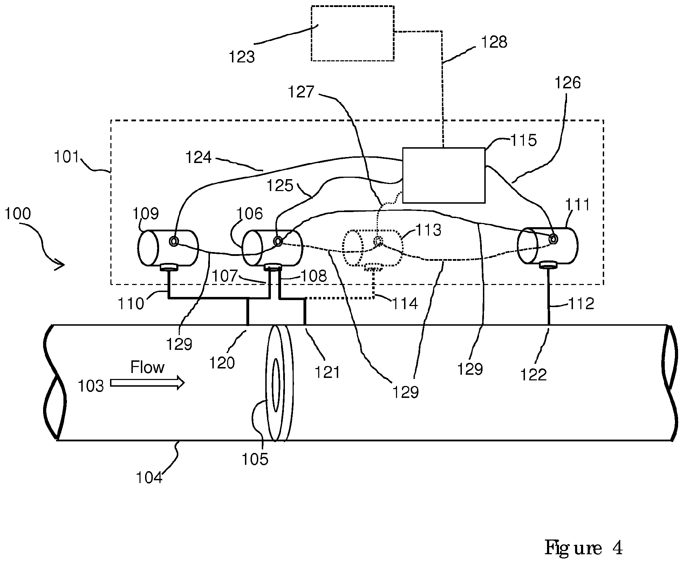

Figure 4 shows another exemplary embodiment of the invention, where two or more of the differential pressure transmitter 106 and the pressure transmitters 109. 111 and 113 communicate with each other through a communication bus. The communication bus can be any wired or wireless industrial field bus system. Typical examples of the communication bus are as Foundation Fieldbus and (wireless) HART. In figure 4 the communication bus is indicated by bus lines 129.

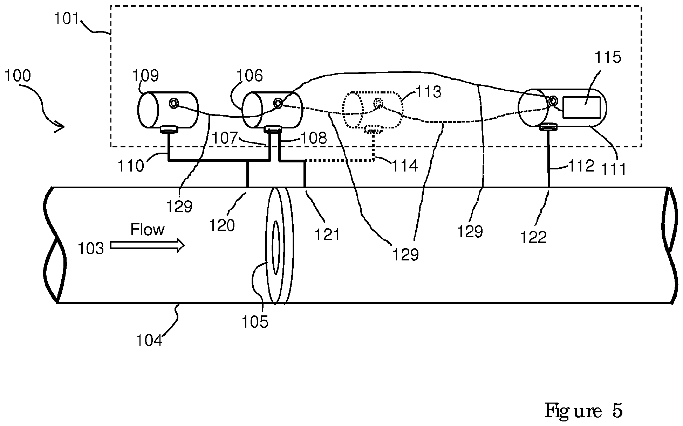

Figure 5 shows another exemplary embodiment of the invention, which differs from the embodiment shown in figure 4 by that the circuitry 115 is implemented in one of the pressure transmitters, here the recovered pressure transmitter 111.

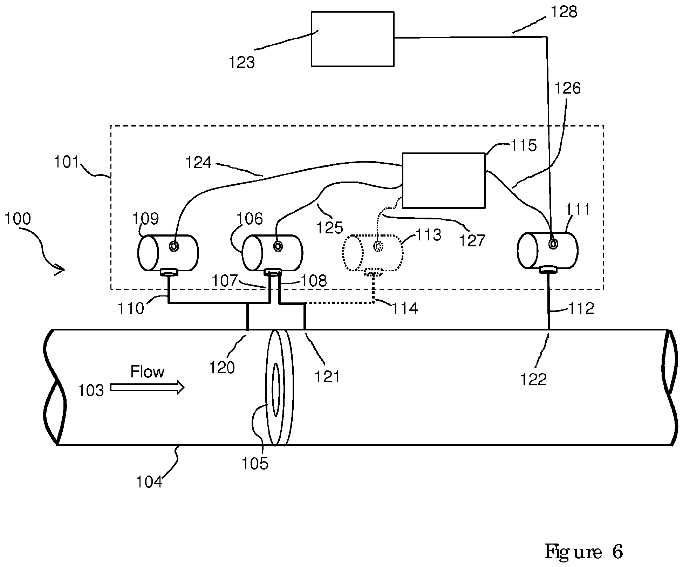

Figure 6 shows another exemplary embodiment of the invention, which differs from the embodiment shown in figure 3 by that one of the pressure transmitters, here just as example the recovered pressure transmitter 111 is configured for communication with a central location 123 and for this purpose is connected with the central location 123 via a signal line 128. The signal line 128 can be any of, but not limited to, 2-wire or 4-wire traditional transmitter cables, field bus cable or wireless communication path like wireless HART or Bluetooth.

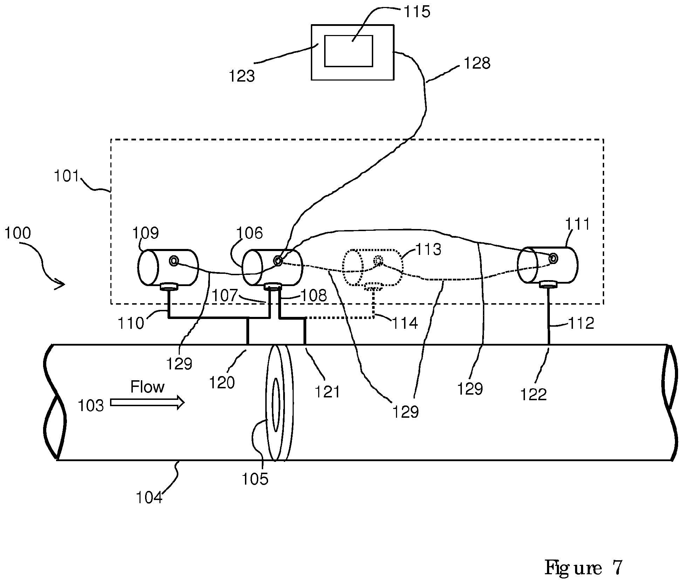

Figure 7 shows another exemplary embodiment of the invention, which differs from the embodiment shown in figure 5 by that one or more pressure transmitters, here as example only the differential pressure transmitter 106, communicate with a central location 123 in which the circuitry 115 is implemented. The central location 123 can for instance be a control system or a flow computer. The communication of the pressure transmitter with the central location is shown as signal line 128 and can be a traditional two-wire analog signal or a wired or wireless digital communications signal such as HART or wireless HART, Modbus and Foundation Fieldbus.

In another exemplary embodiment, not shown here in the figures, two or more of the pressure transmitters 109, 106, 111, 113, may be combined in a single device, for instance a multi-variable transmitter or a dual pressure transmitter.

Turning again to figure 8, this - as already mentioned - , shows an alternative schematic of the process piping 104 with the flow restriction element 105 and the location of the pressure transmitters 113', 106, 109', 111, where the first pressure transmitter 109' is located at the downstream pressure tapping 121, and an optional second pressure transmitter 113' is located at the upstream pressure tapping 120. The various embodiments shown in figures 3 to 7 using different kinds of connection modes can of course in an analogue way also be realized with the transmitter scheme as shown in figure 8.

Summing up, in accordance with the present invention, by using one differential pressure transmitter, one first absolute pressure transmitter either upstream or downstream the flow obstruction and an additional absolute pressure measurement at the recovered pressure location P3 and optionally an additional absolute pressure transmitter located on the opposite side of the flow obstruction in relation to the first absolute pressure transmitter, it is possible to detect various problems in the flow system.

The present invention is based on additional absolute pressure transmitters instead of differential pressure transmitters, which provides the capability to not only reveal an issue with the flow restriction element and the differential pressure transmitter but also with the static pressure measurement. The additional diagnostics capability for pressure transmitters is not provided by prior art solutions.

Furthermore the current invention has the advantage over the prior art that mass flow calculations are not necessary for the diagnostics and that the measuring system does not require calibration.

List of reference numerals

| | |
|---|---|
| 100 | flow metering system |
| 101 | transmitter subsystem |
| 103 | liquid medium |
| 104 | fluid conduit |
| 105 | fluid obstruction |
| 106 | dP transmitter |
| 107 | impulse piping |
| 108 | impulse piping |
| 109 | first pressure transmitter |
| 109' | first pressure transmitter |
| 110 | impulse piping |
| 111 | recovered pressure transmitter |
| 112 | impulse piping |
| 113 | second pressure transmitter |
| 113' | second pressure transmitter |
| 114 | impulse piping |
| 115 | circuitry |
| 120 | first pressure tapping |
| 121 | second pressure tapping |
| 122 | recovered pressure tapping |
| 123 | central location |
| 124 | signal line |
| 125 | signal line |
| 126 | signal line |
| 127 | signal line |
| 128 | signal line |
| 129 | bus line |

**Claims**

**1.** A method of metering flow through a fluid conduit (104), which comprises a fluid obstruction (105), the method comprising the steps of:

- measuring a differential pressure (dP) taken between a first conduit position upstream of the fluid obstruction (105) and a second conduit position downstream of the fluid obstruction (105),
- calculating a fluid flow rate using the differential pressure (dP) measurement,
- measuring a first static pressure upstream (P1m) or downstream (P1m') of the fluid obstruction (105),
- measuring a recovered static pressure (P3m) at a recovered pressure location downstream of the fluid obstruction (105),
- performing diagnostics on a flow metering system (100) based on parameters derived from the differential pressure (dP), the first static pressure (P1m, P1m') and the measured recovered static pressure (P3m), and

deriving a calculated recovered pressure (P3c) downstream of the fluid obstruction (105) from the differential pressure (dP) and the first static pressure (P1m, P1m'), and deriving a diagnostic parameter from the calculated recovered pressure (P3c) and the measured recovered static pressure (P3m).

**2.** The method according to claim 1, **characterized in that** the method further comprises the step of performing diagnostics based upon observing a trend in changes of diagnostic parameters derived from the differential pressure (dP), the first static pressure (P1m, P1m') and the measured recovered static pressure (P3m).

**3.** The method according to claim 1, **characterized in that** the method further comprises the steps of

- deriving the diagnostic parameter from the deviation between the calculated recovered pressure (P3c) and the measured recovered static pressure (P3m), and

- observing a trend of the deviation between the calculated recovered pressure (P3c) and the measured recovered static pressure (P3m), and

- indicating a diagnostic issue once said deviation exceeds an expected value.

4. The method according to any of claims 1 to 3, **characterized in that** the method further comprises the steps of

- measuring a second static pressure (P2m) downstream of the fluid obstruction (105) in case the first static pressure (P1m) is measured upstream of the fluid obstruction (105) or measuring a second static pressure (P2m') upstream of the fluid obstruction (105) in case the first static pressure (P1m') is measured downstream of the fluid obstruction (105), and

- performing diagnostics based on parameters derived from the differential pressure (dP), the first static pressure (P1m, P1m'), the measured recovered static pressure (P3m) and the measured second static pressure (P2m, P2m').

5. The method according to claim 4, **characterized in that** the method further comprises the step of performing diagnostics based upon observing a trend in changes of parameters derived from the differential pressure (dP), the first static pressure (P1m, P1m'), the measured recovered static pressure (P3m) and the measured second static pressure (P2m, P2m').

6. The method according to claim 5, **characterized in that** the method further comprises the steps of

- deriving a calculated second static pressure (P2c) downstream of the fluid obstruction (105) in case the first static pressure (P1m) is measured upstream of the fluid obstruction (105) or deriving a calculated second static pressure (P2c') upstream of the fluid obstruction (105) in case the first static pressure (P1m') is measured downstream of the fluid obstruction (105), from the differential pressure (dP) and the first static pressure (P1m, P1m'), and

- deriving a further diagnostic parameter from the measured second static pressure (P2m, P2m') and the calculated second static pressure (P2c, P2c').

7. The method according to claim 6, **characterized in that** the method further comprises the steps of

- deriving said further diagnostic parameter from the deviation between the measured second static pressure (P2m, P2m') and the calculated second static pressure (P2c, P2c'), and

- observing a trend of the deviation between the measured second static pressure (P2m, P2m') and the calculated second static pressure (P2c, P2c'), and

- indicating a diagnostic issue once the deviation exceeds an expected value.

8. A flow metering system (100), comprising

- a fluid conduit (104), said fluid conduit (104) comprising a fluid obstruction (105),

- a first pressure tapping (120) at a location upstream of the fluid obstruction (105),

- a second pressure tapping (121) at a location downstream of the fluid obstruction (105),

- a differential pressure transmitter (106) arranged for measuring a differential pressure (dP) between the first and second pressure tapping (120, 121),

- a recovered pressure tapping (122) at a recovered pressure location downstream of the second pressure tapping (121),

- a first absolute pressure transmitter (109) arranged for measuring a first static pressure (P1m) at the first pressure tapping (120) or a first absolute pressure transmitter (109') arranged for measuring a first static pressure (P1m') at the second pressure tapping (121),

- a recovered absolute pressure transmitter (111) arranged for measuring the recovered static pressure (P3m) at the recovered pressure tapping (122),

- a circuitry (115) configured to perform diagnostics based on parameters derived from the differential pressure (dP), the first static pressure (P1m, P1m') and the measured recovered static pressure (P3m), wherein performing diagnostics comprises deriving a calculated recovered pressure (P3c) downstream of the fluid obstruction (105) from the differential pressure (dP) and the first static pressure (P1m, P1m'), and deriving a diagnostic parameter from the calculated recovered pressure (P3c) and the measured recovered static pressure (P3m).

**9.** The flow metering system (100) according to claim 8,

further comprising a second absolute pressure transmitter (113) arranged for measuring a second static pressure (P2m) at the second pressure tapping (121) in case the first absolute pressure transmitter (109) is arranged at the first pressure tapping (120) or

further comprising a second absolute pressure transmitter (113') arranged for measuring a second static pressure (P2m') at the first pressure tapping (120) in case the first absolute pressure transmitter (109') is arranged at the second pressure tapping (121),

the circuitry (115) being further configured to perform diagnostics based on parameters derived from the differential pressure (dP), the first static pressure (P1m, P1m'), the measured recovered static pressure (P3m) and the measured second static pressure (P2m, P2m').

**10.** The flow metering system (100) according to any of claims 8 to 9, whereby the pressure transmitters (106, 109, 111, 113) are configured for communicating with each other.

**11.** The flow metering system (100) according to claim 10, wherein the circuitry (115) is located within one of the pressure transmitters (106, 109, 111, 113).

**12.** The flow metering system (100) according to any of claims 8 to 10, whereby at least one of the pressure transmitters (106, 109, 111, 113) is configured for communication with a central location (123).

**13.** The flow metering system (100) according to claim 12, wherein the circuitry is located within the central location (103).


**Patentansprüche**

**1.** Verfahren zum Messen eines Durchflusses durch eine Fluidleitung (104), die ein Fluidhindernis (105) umfasst, wobei das Verfahren die folgenden Schritte umfasst:

- messen eines Differenzdrucks (dP), der zwischen einer ersten Leitungsposition stromaufwärts des Fluidhindernisses (105) und einer zweiten Leitungsposition stromabwärts des Fluidhindernisses (105) gemessen wird,
- berechnen eines Flüssigkeitsdurchsatzes unter Verwendung der Differenzdruckmessung (dP),
- messen eines ersten statischen Drucks stromaufwärts (P1m) oder stromabwärts (P1m') des Flüssigkeitshindernisses (105),
- messen eines wiederhergestellten statischen Drucks (P3m) an einer Stelle des wiederhergestellten Drucks stromabwärts des Fluidhindernisses (105),
- durchführen einer Diagnose an einem Durchflussmesssystem (100) auf der Grundlage von Parametern, die aus dem Differenzdruck (dP), dem ersten statischen Druck (P1m, P1m') und dem gemessenen wiederhergestellten statischen Druck (P3m) abgeleitet werden, und

ableiten eines berechneten wiederhergestellten Drucks (P3c) stromabwärts des Fluidhindernisses (105) aus dem Differenzdruck (dP) und dem ersten statischen Druck (P1m, P1m'), und Ableiten eines Diagnoseparameters aus dem berechneten wiederhergestellten Druck (P3c) und dem gemessenen wiederhergestellten statischen Druck (P3m).

**2.** Verfahren nach Anspruch 1, **dadurch gekennzeichnet, dass** das Verfahren ferner den folgenden Schritt umfasst: durchführen von Diagnosen auf der Grundlage der Beobachtung eines Trends bei den Änderungen der Diagnoseparameter, die aus dem Differenzdruck (dP), dem ersten statischen Druck (P1m, P1m') und dem gemessenen wiederhergestellten statischen Druck (P3m) abgeleitet werden.

**3.** Verfahren nach Anspruch 1, **dadurch gekennzeichnet, dass** das Verfahren außerdem die folgenden Schritte umfasst:

- ableiten des Diagnoseparameters aus der Abweichung zwischen dem berechneten wiederhergestellten Druck (P3c) und dem gemessenen wiederhergestellten Druck (P3m), und
- beobachten eines Trends der Abweichung zwischen dem berechneten wiederhergestellten Druck (P3c) und dem gemessenen wiederhergestellten statischen Druck (P3m), und
- anzeigen eines Diagnoseproblems, sobald die Abweichung einen erwarteten Wert überschreitet.

4. Verfahren nach einem der Ansprüche 1 bis 3, **dadurch gekennzeichnet, dass** das Verfahren ferner die folgenden Schritte umfasst:

- messen eines zweiten statischen Drucks (P2m) stromabwärts des Fluidhindernisses (105), falls der erste statische Druck (P1m) stromaufwärts des Fluidhindernisses (105) gemessen wird, oder Messen eines zweiten statischen Drucks (P2m') stromaufwärts des Fluidhindernisses (105), falls der erste statische Druck (P1m') stromabwärts des Fluidhindernisses (105) gemessen wird, und
- durchführen einer Diagnose auf der Grundlage von Parametern, die aus dem Differenzdruck (dP), dem ersten statischen Druck (P1m, P1m'), dem gemessenen wiederhergestellten statischen Druck (P3m) und dem gemessenen zweiten statischen Druck (P2m, P2m') abgeleitet werden.

5. Verfahren nach Anspruch 4, **dadurch gekennzeichnet, dass** das Verfahren ferner den folgenden Schritt umfasst: durchführen von Diagnosen auf der Grundlage der Beobachtung eines Trends bei den Änderungen von Parametern, die aus dem Differenzdruck (dP), dem ersten statischen Druck (P1m, P1m'), dem gemessenen wiederhergestellten statischen Druck (P3m) und dem gemessenen zweiten statischen Druck (P2m, P2m') abgeleitet werden.

6. Verfahren nach Anspruch 5, **dadurch gekennzeichnet, dass** das Verfahren außerdem die folgenden Schritte umfasst:

- ableiten eines berechneten zweiten statischen Drucks (P2c) stromabwärts des Fluidhindernisses (105) für den Fall, dass der erste statische Druck (P1m) stromaufwärts des Fluidhindernisses (105) gemessen wird, oder Ableiten eines berechneten zweiten statischen Drucks (P2c') stromaufwärts des Fluidhindernisses (105) für den Fall, dass der erste statische Druck (P1m') stromabwärts des Fluidhindernisses (105) gemessen wird, aus dem Differenzdruck (dP) und dem ersten statischen Druck (P1m, P1m'), und
- ableiten eines weiteren Diagnoseparameters aus dem gemessenen zweiten statischen Druck (P2m, P2m') und dem berechneten zweiten statischen Druck (P2c, P2c').

7. Verfahren nach Anspruch 6, **dadurch gekennzeichnet, dass** das Verfahren außerdem die folgenden Schritte umfasst:

- ableiten des weiteren Diagnoseparameters aus der Abweichung zwischen dem gemessenen zweiten statischen Druck (P2m, P2m') und dem berechneten zweiten statischen Druck (P2c, P2c'), und
- beobachten eines Trends der Abweichung zwischen dem gemessenen zweiten statischen Druck (P2m, P2m') und dem berechneten zweiten statischen Druck (P2c, P2c'), und
- anzeigen eines Diagnoseproblems, sobald die Abweichung einen erwarteten Wert überschreitet.

8. Durchflussmesssystem (100), das Folgendes umfasst

- eine Fluidleitung (104), wobei die Fluidleitung (104) ein Fluidhindernis (105) umfasst,
- eine erste Druckentnahme (120) an einer Stelle stromaufwärts des Flüssigkeitshindernisses (105),
- eine zweite Druckentnahme (121) an einer Stelle stromabwärts der Flüssigkeitsblockade (105),
- einen Differenzdrucktransmitter (106), der zur Messung eines Differenzdrucks (dP) zwischen dem ersten und zweiten Druckabgriff (120, 121) angeordnet ist,
- eine Druckentnahme (122) für den wiederhergestellten Druck an einer Stelle für den wiederhergestellten Druck stromabwärts der zweiten Druckanzapfung (121),
- einen ersten Absolutdrucktransmitter (109), der zur Messung eines ersten statischen Drucks (P1m) an der ersten Druckentnahme (120) angeordnet ist, oder einen ersten Absolutdrucktransmitter (109'), der zur Messung eines ersten statischen Drucks (P1m') an der zweiten Druckentnahme (121) angeordnet ist,
- einen wiederhergestellten Absolutdrucktransmitter (111), der zur Messung des wiederhergestellten statischen Drucks (P3m) an der wiederhergestellten Druckentnahme (122) angeordnet ist,
- eine Schaltung (115), die zum Durchführen einer Diagnose auf der Grundlage von Parametern eingerichtet, die aus dem Differenzdruck (dP), dem ersten statischen Druck (P1m, P1m') und dem gemessenen wiederhergestellten statischen Druck (P3m) abgeleitet werden, wobei die Durchführung der Diagnose das Ableiten eines berechneten wiederhergestellten Drucks (P3c) stromabwärts des Fluidhindernisses (105) aus dem Differenzdruck (dP) und dem ersten statischen Druck (P1m, P1m') und das Ableiten eines Diagnoseparameters aus dem berechneten wiederhergestellten Druck (P3c) und dem gemessenen wiederhergestellten statischen Druck (P3m) umfasst.

**9.** Durchflussmesssystem (100) nach Anspruch 8,

weiter aufweisend einen zweiten Absolutdrucktransmitter (113), der zur Messung eines zweiten statischen Drucks (P2m) an der zweiten Druckentnahme (121) eingerichtet ist, falls der erste Absolutdrucktransmitter (109) an der ersten Druckentnahme (120) angeordnet ist oder

ferner einen zweiten Absolutdrucktransmitter (113'), der zur Messung eines zweiten statischen Drucks (P2m') an der ersten Druckentnahme (120) eingerichtet ist, falls der erste Absolutdrucktransmitter (109') an der zweiten Druckentnahme (121) angeordnet ist,

wobei die Schaltung (115) ferner dazu eingerichtet ist, dass sie eine Diagnose auf der Grundlage von Parametern durchführt, die von dem Differenzdruck (dP), dem ersten statischen Druck (P1m, P1m'), dem gemessenen wiederhergestellten statischen Druck (P3m) und dem gemessenen zweiten statischen Druck (P2m, P2m') abgeleitet sind.

**10.** Durchflussmesssystem (100) nach einem der Ansprüche 8 bis 9, wobei die Drucktransmitter (106, 109, 111, 113) so konfiguriert sind, dass sie miteinander kommunizieren können.

**11.** Durchflussmesssystem (100) nach Anspruch 10, wobei die Schaltung (115) in einem der Drucktransmitter (106, 109, 111, 113) angeordnet ist.

**12.** Durchflussmesssystem (100) nach einem der Ansprüche 8 bis 10, wobei mindestens einer der Drucktransmitter (106, 109, 111, 113) für die Kommunikation mit einer zentralen Stelle (123) ausgelegt ist.

**13.** Durchflussmesssystem (100) nach Anspruch 12, wobei sich die Schaltung innerhalb der zentralen Stelle (103) befindet.

**Revendications**

**1.** Procédé de mesure d'un écoulement à travers un conduit de fluide (104), lequel comprend un obstacle au fluide (105), le procédé comprenant les étapes suivantes :

- la mesure d'une pression différentielle (dP) prélevée entre une première position de conduit en amont de l'obstacle au fluide (105) et une deuxième position de conduit en aval de l'obstacle au fluide (105),
- le calcul d'un débit de fluide à l'aide de la mesure de la pression différentielle (dP),
- la mesure d'une première pression statique en amont (P1m) ou en aval (P1m') de l'obstacle au fluide (105),
- la mesure d'une pression statique rétablie (P3m) à un emplacement de pression rétablie en aval de l'obstacle au fluide (105),
- la réalisation de diagnostics sur un système de mesure d'écoulement (100) sur la base de paramètres déduits à partir de la pression différentielle (dP), de la première pression statique (P1m, P1m') et de la pression statique rétablie mesurée (P3m),
et
- la déduction d'une pression rétablie calculée (P3c) en aval de l'obstacle au fluide (105) à partir de la pression différentielle (dP) et de la première pression statique (P1m, P1m'), et la déduction d'un paramètre de diagnostic à partir de la pression rétablie calculée (P3c) et de la pression statique rétablie mesurée (P3m).

**2.** Procédé selon la revendication 1, le procédé étant **caractérisé en ce qu'**il comprend en outre l'étape suivante la réalisation de diagnostics sur la base de l'observation d'une tendance dans des variations de paramètres de diagnostic déduits à partir de la pression différentielle (dP), de la première pression statique (P1m, P1m') et de la pression statique rétablie mesurée (P3m).

**3.** Procédé selon la revendication 1, le procédé étant **caractérisé en ce qu'**il comprend en outre les étapes suivantes

- la déduction du paramètre de diagnostic à partir de l'écart entre la pression rétablie calculée (P3c) et la pression statique rétablie mesurée (P3m), et
- l'observation d'une tendance de l'écart entre la pression rétablie calculée (P3c) et la pression statique rétablie mesurée (P3m), et
- l'indication d'un problème de diagnostic dès l'instant que ledit écart dépasse une valeur attendue.

**4.** Procédé selon l'une quelconque des revendications 1 à 3, le procédé étant **caractérisé en ce qu'**il comprend en outre les étapes suivantes

- la mesure d'une deuxième pression statique (P2m) en aval de l'obstacle au fluide (105) dans le cas où la première pression statique (P1m) est mesurée en amont de l'obstacle au fluide (105), ou la mesure d'une deuxième pression statique (P2m') en amont de l'obstacle au fluide (105) dans le cas où la première pression statique (P1m') est mesurée en aval de l'obstacle au fluide (105), et
- la réalisation de diagnostics sur la base de paramètres déduits à partir de la pression différentielle (dP), de la première pression statique (P1m, P1m'), de la pression statique rétablie mesurée (P3m) et de la deuxième pression statique mesurée (P2m, P2m').

**5.** Procédé selon la revendication 4, le procédé étant **caractérisé en ce qu'**il comprend en outre l'étape suivante
la réalisation de diagnostics sur la base de l'observation d'une tendance dans des variations de paramètres de diagnostic déduits à partir de la pression différentielle (dP), de la première pression statique (P1m, P1m'), de la pression statique rétablie mesurée (P3m) et de la deuxième pression statique mesuré (P2m, P2m').

**6.** Procédé selon la revendication 5, le procédé étant **caractérisé en ce qu'**il comprend en outre les étapes suivantes

- la déduction d'une deuxième pression statique calculée (P2c) en aval de l'obstacle au fluide (105) dans le cas où la première pression statique (P1m) est mesurée en amont de l'obstacle au fluide (105), ou la déduction d'une deuxième pression statique calculée (P2c') en amont de l'obstacle au fluide (105) dans le cas où la première pression statique (P1m') est mesurée en aval de l'obstacle au fluide (105), à partir de la pression différentielle (dP) et de la première pression statique (P1m, P1m'), et
- la déduction d'un paramètre de diagnostic supplémentaire à partir de la deuxième pression statique mesurée (P2m, P2m') et de la deuxième pression statique calculée (P2c, P2c').

**7.** Procédé selon la revendication 6, le procédé étant **caractérisé en ce qu'**il comprend en outre les étapes suivantes

- la déduction dudit paramètre de diagnostic supplémentaire à partir de l'écart entre la deuxième pression statique mesurée (P2m, P2m') et la deuxième pression statique calculée (P2c, P2c'), et
- l'observation d'une tendance de l'écart entre la deuxième pression statique mesurée (P2m, P2m') et la deuxième pression statique calculée (P2c, P2c'), et
- l'indication d'un problème de diagnostic dès l'instant que l'écart dépasse une valeur attendue.

**8.** Système de mesure d'écoulement (100), comprenant

- un conduit de fluide (104), ledit conduit de fluide (104) comprenant un obstacle au fluide (105),
- une première prise de pression (120) à un emplacement en amont de l'obstacle au fluide (105),
- une deuxième prise de pression (121) à un emplacement en aval de l'obstacle au fluide (105),
- un émetteur de pression différentielle (106) agencé pour mesurer une pression différentielle (dP) entre la première et la deuxième prise de pression (120, 121),
- une prise de pression rétablie (122) en un emplacement de pression rétablie en aval de la deuxième prise de pression (121),
- un premier émetteur de pression absolue (109) agencé pour mesurer une première pression statique (P1m) à la première prise de pression (120), ou un premier émetteur de pression absolue (109') agencé pour mesurer une première pression statique (P1m') à la deuxième prise de pression (121),
- un émetteur de pression absolue rétablie (111) agencé pour mesurer la pression statique rétablie (P3m) à la prise de pression rétablie (122),
- une circuiterie (115) configurée pour réaliser des diagnostics sur la base de paramètres déduits à partir de la pression différentielle (dP), de la première pression statique (P1m, P1m') et de la pression statique rétablie mesurée (P3m), la réalisation de diagnostics comprenant la déduction d'une pression rétablie calculée (P3c) en aval de l'obstacle au fluide (105) à partir de la pression différentielle (dP) et de la première pression statique (P1m, P1m'), et la déduction d'un paramètre de diagnostic à partir de la pression rétablie calculée (P3c) et de la pression statique rétablie mesurée (P3m).

**9.** Système de mesure d'écoulement (100) selon la revendication 8,

comprenant en outre un deuxième émetteur de pression absolue (113) agencé pour mesurer une deuxième pression statique (P2m) à la deuxième prise de pression (121) dans le cas où le premier émetteur de pression absolue (109) est agencé à la première prise de pression (120), ou

comprenant en outre un deuxième émetteur de pression absolue (113') agencé pour mesurer une deuxième pression statique (P2m') à la première prise de pression (120) dans le cas où le premier émetteur de pression absolue (109' ) est agencé à la deuxième prise de pression (121),

la circuiterie (115) étant configurée en outre pour réaliser des diagnostics sur la base de paramètres déduits à partir de la pression différentielle (dP), de la première pression statique (P1m, P1m'), de la pression statique rétablie mesurée (P3m) et de la deuxième pression statique mesurée (P2m, P2m').

10. Système de mesure d'écoulement (100) selon l'une quelconque des revendications 8 à 9, les émetteurs de pression (106, 109, 111, 113) étant configurés pour communiquer entre eux.

11. Système de mesure d'écoulement (100) selon la revendication 10, la circuiterie (115) étant située à l'intérieur d'un des émetteurs de pression (106, 109, 111, 113).

12. Système de mesure d'écoulement (100) selon l'une quelconque des revendications 8 à 10, au moins un des émetteurs de pression (106, 109, 111, 113) étant configuré pour communiquer avec un emplacement central (123) .

13. Système de mesure d'écoulement (100) selon la revendication 12, la circuiterie étant située à l'intérieur de l'emplacement central (103).

Figure 1

Figure 8

Figure 2

Figure 3

Figure 4

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008025935 A
- WO 2012118690 A1
- WO 1997042467 A1
- US 2002189369 A1
- US 2009326839 A1
- WO 2012009062 A1
- US 2005097963 A1
- US 2008006094 A1
- JP H08136386 A
- US 2007225924 A1